# EUROPÄISCHE PATENTSCHRIFT

(11) **EP 0 389 466 B1**
(45) Veröffentlichungstag und Bekanntmachung des Hinweises auf die Patenterteilung: **26.05.1993**
(21) Anmeldenummer: 90890066.5
(22) Anmeldetag: 08.03.1990
(51) Int. Cl.: F02B 27/04

(54) **Auspuffanlage für Zweitakt-Brennkraftmaschinen**
Exhaust system for two-stroke engines
Système d'échappement pour moteurs à deux temps

(30) Priorität: 23.03.1989 AT 695/89; 31.08.1989 AT 2058/89
(43) Veröffentlichungstag der Anmeldung: 26.09.1990
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Landfahrer, Klaus, Dr., A-8020 Graz (AT); Alten, Hans, Dipl.-Ing. Dr., A-8020 Graz (AT); Plohberger, Diethard, Dipl-Ing., A-8530 Deutschlandsberg (AT); Fischer, Christof, Dipl.-Ing., A-8010 Graz (AT); Wojik, Karl, Dipl. Ing., A-8045 Graz (AT)
(74) Vertreter: Krause, Walter, Dr. Dipl.-Ing.

(56) Entgegenhaltungen:
- WO-A-85/04689
- DE-A- 1 601 350
- DE-C- 885 782
- DE-C- 908 314
- FR-A- 625 587
- FR-A- 2 534 969
- GB-A- 880 192
- US-A- 3 367 311
- US-A- 3 434 280
- US-A- 4 348 862
- PATENT ABSTRACTS OF JAPAN, Band 9, Nr. 330 (M-442)[2053], 25. Dezember 1985;& JP-A-60 162 007 (SUZUKI JIDOSHA KOGYO K.K.) 23-08-1985
- PATENT ABSTRACTS OF JAPAN, Band 12, Nr. 227 (M-713)[3074], 28. Juni 1988;& JP-A-63 21 317 (SANSHIN IND.) 28-01-1988

## Beschreibung

Die Erfindung bezieht sich auf eine Auspuffanlage für Zweitakt-Brennkraftmaschinen mit einem Auspuffrohr je Zylinder, an dessen einen konstanten Querschnitt aufweisender Anfangsbereich zumindest zwei als Diffusoren ausgebildete konische Bereiche anschließen, welche in einen gemeinsamen Sammelbehälter münden, an welchen das Abgas-Endrohr angeschlossen ist.

Aus der DE-PS 885 782 ist eine Auspuffanlage dieser Art bekannt, bei welcher die Abgase mehrerer gleichlanger Auspuffleitungen in eine Auspuffkammer und weiter über mehrere parallelgeschaltete Rohrleitung der gleichen Längen in einen Auspuffsammelbehälter und schließlich ins Freie geleitet werden. Die Länge der Auspuffleitungen und der Rohrleitungen ist so dimensioniert, daß die Laufzeit der beim Öffnen der Auspufföffnungen entstehenden Druckwellen längs des zwischen dem auspuffenden und dem aufzuladenden Zylinder liegenden Weges etwa gleich der Zeit ist, in der sich bei der beabsichtigten Maschinendrehzahl die Kurbelwelle der Maschine um den zwischen den Beginn des Vorauslasses des auspuffenden und den Abschluß der Spühlschlitze des aufzuladenden Zylinders liegenden Kurbelwinkel dreht. Dadurch löschen sich störende Druckwellen gegenseitig aus und die Spülung wird verbessert. Durch diffusorartige Gestaltung der Rohrleitungen wird erreicht, daß schon während des Durchlaufens der Druckwellenzweige durch die Rohrleitungen zum Sammelbehälter eine stetige, zum Zylinder zurücklaufende Drucksenkung erzeugt wird, die den Spülvorgang der Zylinder weiter begünstigt. Der Effekt des gegenseitigen Auslöschens störender Druckwellen kann nur bei mehrzylindrigen Brennkraftmaschinen genützt werden. Die diffusorbedingte Verbesserung des Spülvorganges ist nur auf einen sehr engen Drehzahlbereich beschränkt.

Aus der US-A 3,434.280 ist eine Auspuffanlage bekannt, bei der ein Rohr mit anfänglich konstantem Querschnittsverlauf vom Auspuffschlitz weggeführt wird und zur Erzeugung einer rücklaufenden Saugwelle schließt daran ein Diffusor an, der, nach einem kurzen Übergangsstück, in einen Gegenkonus oder eine Blende mündet. In dieser Querschnittsverengung wird eine zum Zylinder laufende Druckwelle erzeugt, welche den Zylinderraum mit Frischluft versorgt, die während der Spülphase vom Einlaßschlitz durch den Zylinderraum in den Auspuff gelangt ist.

Bei solchen Motoren mit hohen Nennleistungen ist die Fahrbarkeit meist auf ein sehr enges Drehzahlband beschränkt - die Motoren verlieren im unteren Drehzalbereich sehr an Leistung. Der Grund dafür liegt in den gasdynamischen Vorgängen in der Auspuffanlage, welche in der Spülphase den Ladungswechsel, und damit die Motorleistung, stark beeinflussen.

Nach Öffnen des Auslaßschlitzes läuft eine starke Druckwelle in den Auspuff. Beim Durchlaufen des Diffusors wird eine rücklaufende Welle erzeugt, welche zu dem noch offenen Auslaßschlitz zum Zylinder gelangt und den Druck im Zylinder senkt. Andererseits wird die durch den Diffusor laufende Druckwelle nach dem Erreichen des Gegenkonus, oder der Blende, als Druckwelle zurückgeworfen und erreicht den Zylinderraum zeitversetzt (später aufgrund der längeren Strecke) gegenüber der Saugwelle. Es kommt zu einer auspuffseitigen Nachladung des Zylinders.

Der Erfindung liegt die Aufgabe zugrunde, die genannten Nachteile der bekannten Auspuffanlage zu vermeiden und eine Auspuffanlage für Zweitakt-Brennkraftmaschinen mit beliebiger Zylinderanzahl vorzuschlagen, mit der es möglich ist, die Drehmomentcharakteristik in einem breiten Drehzahlbereich deutlich zu verbessern.

Diese Aufgabe wird erfindungsgemäß dadurch gelöst, daß die Diffusoren über parallele, gleichzeitig durchströmte Rohrstränge unterschiedlicher Länge an den Anfangsbereich des Abgasrohres konstanten Querschnittes anschließen und das Abgas-Endrohr einen Katalysator und/oder Schalldämpfer umfaßt.

Dieses System bewirkt, daß eine vom Zylinder kommende Druckwelle zweimal als Saugwelle reflektiert wird und durch die unterschiedliche Lauflänge zeitversetzt den noch offenen Auspuffschlitz erreicht. Dadurch wird die Wirkungsdauer der Saugwelle im Vergleich zur eingangs beschriebenen Auspuffanlage bekannter Art verlängert.

Da die Enden beider parallel geschalteter Diffusoren weiters über einen gemeinsamen Behälter, z.B. Rohr, verbunden sind, gelangt eine Druckwelle nach dem Durchlaufen beider Diffusoren wieder zum Zylinder zurück und kann diesen ebenfalls mit abgasseitig vorgelagerter Frischluft nachladen.

In weiterer Ausgestaltung der Erfindung können für mehrzylindrige Zweitakt-Brennkraftmaschinen die Auspuffrohre aller Zylinder an einen einzigen kleinvolumigen Sammelbehälter angeschlossen sein, von dem die zu zwei Diffusoren führenden zwei Rohrstränge unterschiedlicher Länge abzweigen. Durch eine richtige Längenabstimmung kann die Saugwelle aus dem ersten Diffusor- dazu verwendet werden, die Reflexion des ersten Druckpulses nach dem Öffnen des Auslaßschlitzes an den anderen Zylindern zu dämpfen. Die Saugwelle aus dem zweiten Diffusor wird dann zur Erhöhung des Luftdurchsatzes verwendet.

Erfindungsgemäß können weiters Rohrverbindungsstücke zwischen den beiden Diffusoren und dem Sammelbehälter vorgesehen sein, die verschiedene Längen aufweisen. Damit ist die Möglichkeit einer Abstimmung der Auspuffanlage gemäß der Erfindung erleichtert.

In weiterer Ausgestaltung der Erfindung kann der Sammelbehälter aus zwei Teilen bestehen, die miteinander über eine Rohrleitung vorbestimmter Länge verbunden sind und in die je einer der beiden Rohrstränge über die Diffusoren mündet. Die zeitliche Abstimmung der Saugwellen erfolgt über die Auslegung der beiden Rohrstränge; die Laufzeit der Druckwelle wird durch die Gesamtlänge beider Stränge einschließlich der Rohrleitung zwischen den beiden Teilen des Sammelbehälters bestimmt. Durch Variation des Volumens des Sammelbehälters kann weiters die Druckpulsstärke beeinflußt werden.

Im Rahmen der Erfindung kann vorteilhafter Weise der Katalysator in den Sammelbehälter integriert sein.

In weiterer Ausgestaltung der Erfindung können beide Diffusoren im Sammelbehälter angeordnet sein, wobei der Sammelbehälter gleichzeitig die Strömungsverbindung zwischen den Austritten der Diffusoren herstellt.

Bei einem Betrieb mit Katalysator ist bekanntlich die Abgastemperatur für die Schadstoffreduktion von Bedeutung. Bei niedrigen Lasten und in der Startphase sind gerade beim Zweitaktmotor die Abgastemperaturen niedrig. Um eine weitere Abkühlung der Abgase durch den Wärmeübergang an der Auspuffoberfläche zu vermeiden, wird in weiterer Ausgestaltung der Erfindung vorgeschlagen, daß der Einströmraum der Zuleitung zum Sammelbehälter und der Abströmraum der Zuleitung aus dem Sammelbehälter zum Abgas-Endrohr räumlich zusammengefaßt sind und ein Regelorgan, vorzugsweise eine Regelklappe, in diesem Bereich vorgesehen ist, die in einer Endstellung die Einströmung der Auspuffgase in den Sammelraum über die beiden Diffusoren und in der anderen Endstellung die Zuleitung mit dem Abgas-Endrohr unter Umgehung des Sammelbehälters verbindet. Die "kalten" Abgase bei niedrigen Lasten werden so zum Eintritt in den Katalysator umgelenkt, bei hohen Lasten hingegen ist das Doppeldiffusor-System zugeschaltet, die Abgase gelangen aus dem Sammelraum zum Katalysator.

Die Steuerung der Drosselklappenstellung kann über schnell reagierende Thermostate oder elektromagnetisch über eine Kennfeldsteuerung erfolgen.

Gemäß der Erfindung kann auch der längere Rohrstrang mit dem zugehörigen Diffusor koaxial im kürzeren Rohrstrang mit dem zweiten Diffusor angeordnet sein. Von besonderem Vorteil ist hiebei das lange, im Durchmesser verhältnismäßig kleine Rohr kurz nach dem Verteilerbehälter. Dadurch wird das Unterbringen der Auspuffanlage im engen Motorraum außerordentlich erleichtert, unabhängig von der Einbaulage des Motors. Da die Oberfläche des Hüllrohres kleiner ist als diejenige einer vergleichbaren getrennten Zweirohranlage, wird in sehr willkommener Weise die Ansprechdauer des Katalysators durch die verkürzte Aufheizzeit herabgesetzt.

Eine bevorzugte Ausführungsform gemäß der Erfindung besteht darin, daß der Sammelbehälter im wesentlichen aus einem Rohr gebildet ist und der am längeren Rohrstrang anschließende Diffusor kürzer ist als der Sammelbehälter und zur Gänze in diesem liegt, und der an dem kürzeren Rohrstrang anschließende Diffusor nur mit einem kurzen Anschlußstück in den Sammelbehälter mündet.

In weiterer Ausgestaltung der Erfindung können das den Sammelbehälter bildende Rohr einen ovalen Querschnitt aufweisen, der von dem an den längeren Rohrstrang anschließenden Diffusor etwa mittig durchsetzt und die beiden Restquerschnitte an der Längsachse des ovalen Querschnittes von dem aus dem zweiten Diffusor austretenden Abgas durchströmt sein.

Die Erfindung wird nachfolgend anhand einiger Ausführungsbeispiele näher erläutert. Es zeigen in schematischer Darstellung
Fig. 1 eine Auspuffanlage bekannter Art,
Fig. 2 eine Auspuffanlage gemäß der Erfindung,
Fig. 3 vergleichende Kennlinien zur Darstellung der Wirkungsweise der erfindungsgemäßen Auspuffanlage,
Fig. 4 bis Fig. 8 je eine weitere Ausführung gemäß der Erfindung und
Fig. 9 ein anderes Ausführungsbeispiel gemäß der Erfindung im axialen Längsschnitt,
Fig. 10 einen Schnitt nach der Linie X-X in Fig. 9 und
Fig. 11 einen Schnitt nach der Linie XI-XI in Fig. 10.

Gleiche und funktionell ähnliche Teile sind mit den selben Bezugszeichen versehen.

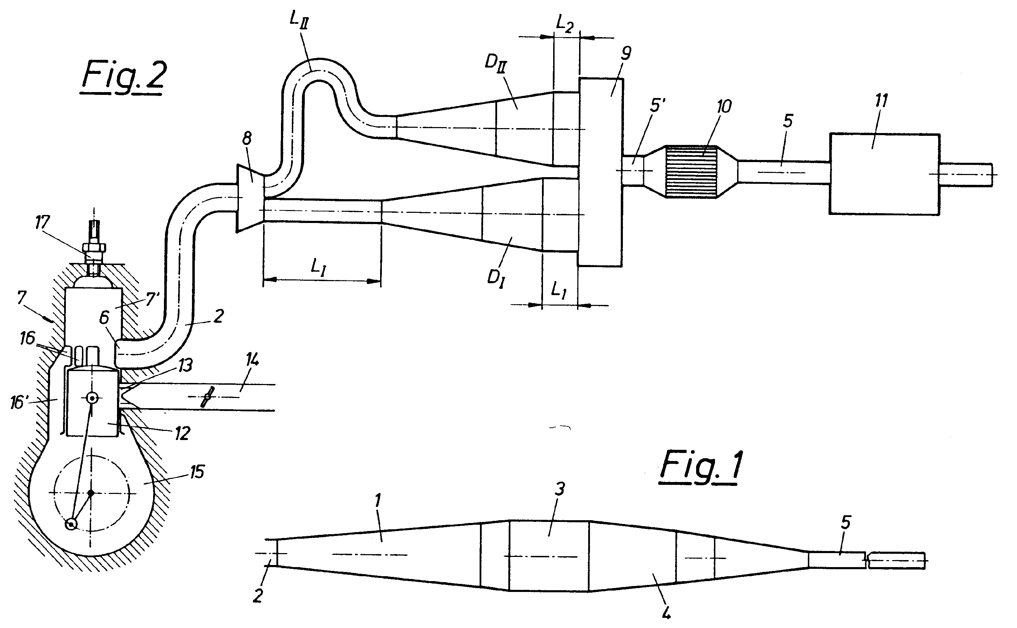

Die in Fig. 1 dargestellte Auspuffanlage bekannter Art (siehe z.B. US-A 3 434 280 Fig. 1) besteht aus einem Diffusor 1, welcher an das an den Auspuffschlitz des Motors anschließende Rohr 2 konstanten Querschnittes anschließt und über ein kurzes zylindrisches Übergangsstück 3 mit dem Gegenkonus 4 in Strömungsverbindung steht. Der Gegenkonus 4 mündet in das Abgas-Endrohr 5, von welchem nur ein Bruchstück dargestellt ist.

Bei der erfindungsgemäßen Ausführung nach Fig. 2 mündet das an den Auspuffschlitz 6 im Zylinder 7' des generell mit 7 bezeichneten Zweitaktmotors in einen kleinvolumigen Sammelbehälter 8, an welchen zwei Rohrstränge L_{I} und L_{II} verschiedener Länge angeschlossen sind. An den kürzeren Rohrstrang L_{I} ist der Diffusor D_{I} und an den längeren Rohrstrang L_{II} der Diffusor D_{II} angeschlossen. Die beiden Diffusoren D_{I} und D_{II} münden über verschieden lange Rohrstücke L₁ bzw. L₂ in den Sammelbehälter 9, sodaß die beiden Rohrstränge L_{I} und L_{II} sowohl über den kleinvolumigen Sammelbehälter 8 als auch über den Sammelbehälter 9 in Strömungsverbindung stehen. An den Sammelbehälter 9 ist das Abgas-Endrohr 5 über den Katalysator 10 und einen kurzen Stutzen 5' angeschlossen. In das Abgas-Endrohr 5 ist ein Schalldämpfer 11 eingesetzt. Der Kolben 12 des Zweitaktmotors 7 steurt die Einlaßöffnung 13 für das durch das Ansaugrohr 14 in den Kurbelraum 15 einströmende Luft-Kraftstoff-Gemisch, als auch die Einlaßschlitze 16 im Zylinder 7' für die vom Kolben komprimierte Luft und den Auspuffschlitz 6.

Beim Abwärtsgang des Kolben 12 öffnet dieser zuerst den Auspuffschlitz 6, worauf der größte Teil der Abgase über die Auspuffanlage entweicht. Die Spülung des Zylinders erfolgt beim weiteren Abwärtsgang des Kolbens 12 und Öffnen der Einlaßschlitze 16, welche über Kanäle 16' mit dem Kurbelraum 15 in Verbindung stehen, sodaß die zuvor durch den Kolben 12 im Kurbelraum 15 verdichtete Luft in den zylinder einströmt und das in diesem noch enthaltene Abgas mit möglichst wenig Luftverlust durch den Auspuffschlitz 6 in das Rohr 2 verdrängt. Die Zündkerze ist mit 17 bezeichnet.

Die erfindungsgemäße Auspuffanlage kann natürlich auch bei Dieselmotoren verwendet werden, wobei anstelle der Zündkerze 17 eine Einspritzdüse angeordnet ist und durch das Ansaugrohr die Verbrennungsluft einströmt.

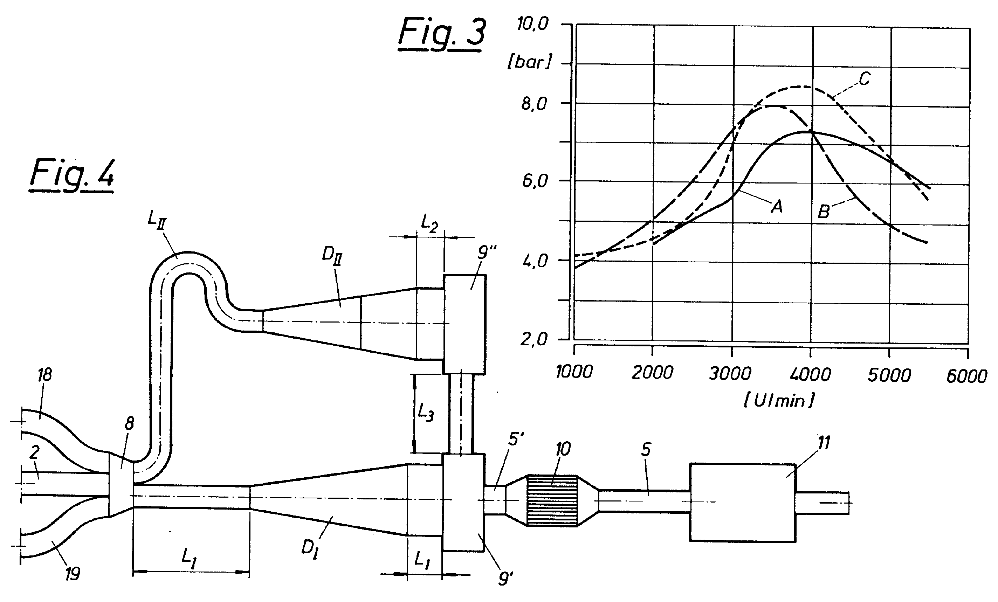

Die Auspuffanlage gemäß der Erfindung nach Fig. 4 ist für einen Dreizylinder-Motor bestimmt; dementsprechend sind außer dem Rohr 2 noch zwei weitere Rohr 18 und 19 vorgesehen, die mit konstantem Querschnitt die Verbindung zu den einzelnen Zylindern herstellen. Die drei Auspuffrohre 2, 18 und 19 münden in den kleinvolumigen Sammelbehälter 8, an den wiederum die Rohrstränge L_{I} und L_{II} und an diese der Diffusor D_{I} bzw. der Diffusor D_{II} angeschlossen sind. Die Diffusoren sind wiederum über Rohrstutzen L₁ bzw. L₂ an den in diesem Falle aus zwei Teilen 9' und 9'' bestehenden Sammelbehälter angeschlossen. Die beiden Sammelbehälterteile 9' und 9'' sind durch die Leitung L₃ miteinander verbunden. Das Abgas-Endrohr 5 ist über den Katalysator 10 und den Rohrstutzen 5' an den Sammelbehälterteil 9' angeschlossen und führt über den Schalldämpfer 11 ins Freie.

Die Wirkung der erfindungsgemäßen Auspuffanlage ist aus der in Fig. 3 dargestellten Abhängigkeit des Mitteldruckes von der Drehzahl ersichtlich. Die voll gezeichnete Kurve A bezieht sich auf eine leistungsoptimierte Eindiffusoranlage, die gestrichelte Kurve B auf das maximale Drehmoment einer Eindiffusoranlage und die gestrichelte Linie C bezieht sich auf eine Doppeldiffusor-Auspuffanlage gemäß der Erfindung. Aus der Gegenüberstellung ersieht man ganz deutlich, daß die erfindungsgemäße Auspuffanlage besonders im Drehzahlbereich zwischen 3000 und 5000 U/min bedeutend überlegen ist.

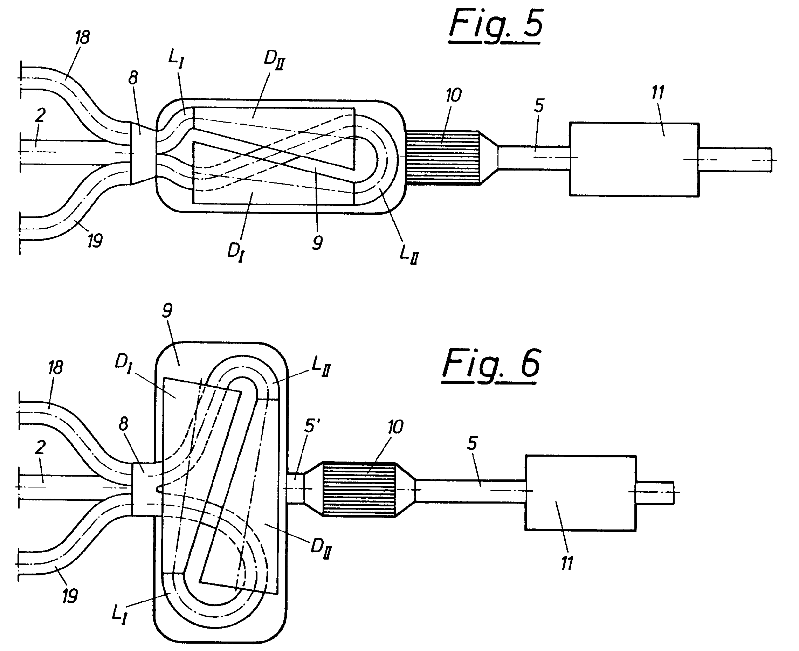

Die Fig. 5 stellt eine Ausführung gemäß der Erfindung dar, bei welcher sowohl die Diffusoren D_{I} und D_{II} als auch die Rohrstutzen L_{I} und L_{II} in den Sammelbehälter 9 integriert sind. Dabei ist die Längserstreckung des im Querschnitt rechteckigen Sammelbehälters 9 in Abströmungsrichtung der Abgase angeordnet. Auch der Katalysator 10 kann in den Sammelbehälter 9 integriert sein. Der Sammelbehälter 9 kann auch, je nach Zweckmäßigkeit, anders geformt sein; wichtig dabei ist aber, daß dieser Sammelbehälter auch die Strömungsverbindung zwischen den Austritten der Diffusoren herstellt.

Die Ausführung nach Fig. 6 unterscheidet sich von jener nach Fig. 5 lediglich dadurch, daß der Sammelbehälter 9 quer zur Hauptströmungsrichtung der Abgase angeordnet und der Katalysator 10 über einen Stutzen 5' an diesen angeschlossen ist.

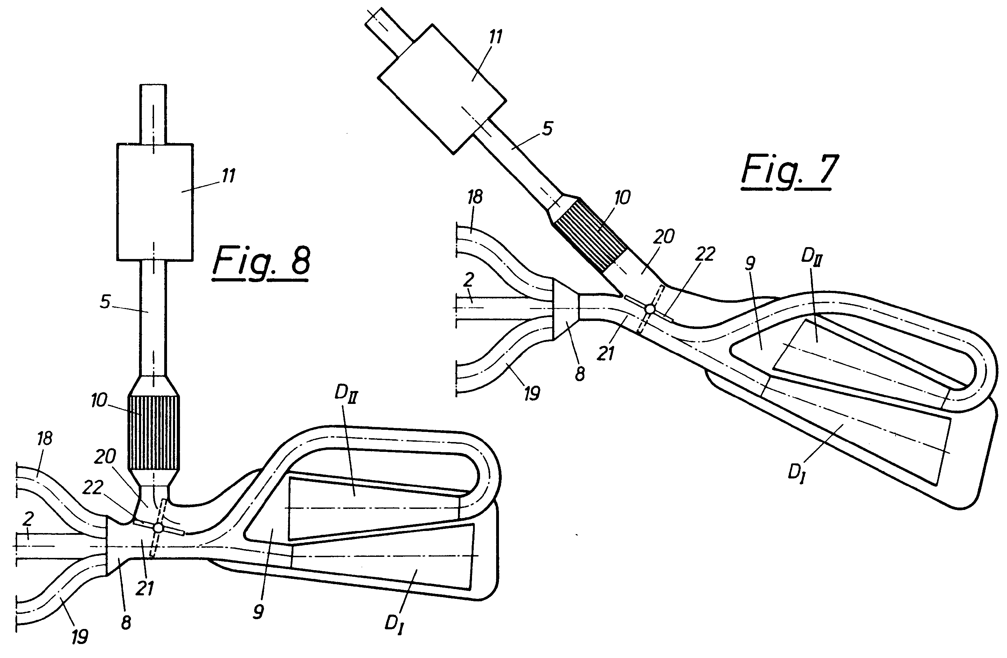

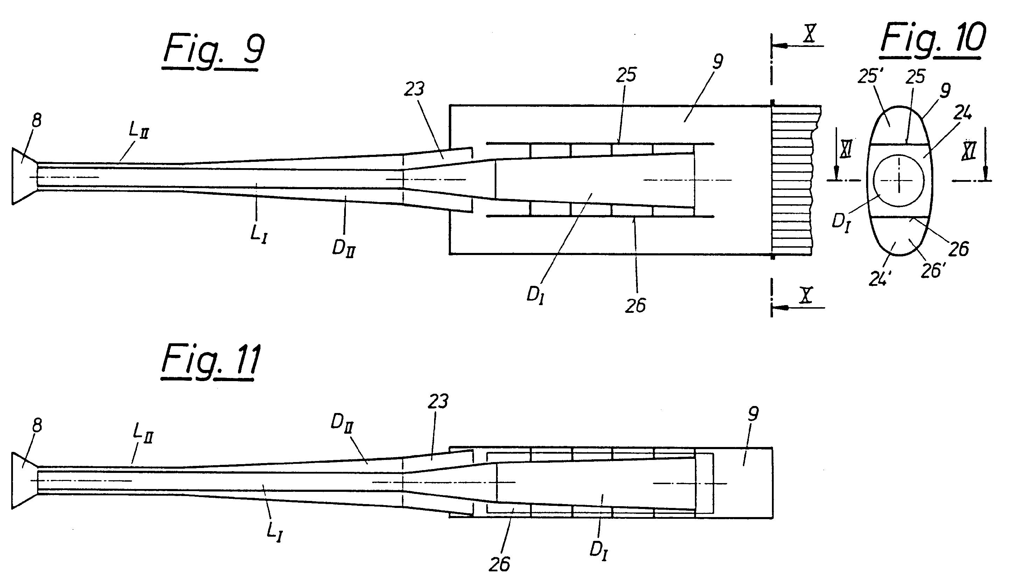

Bei den Ausführungen nach den Fig. 8 und 9 ist der Abströmraum 20 zum Katalysator 10 und der Einströmraum 21 der Abgase zu den Diffusoren D_{I} und D_{II} benachbart angeordnet. Eine in diesem Bereich gelagerte Regelklappe 22 bewirkt in der gestrichelten Lage ein Abschalten der Diffusoren D_{I} und D_{II} und Ausströmen der Abgase direkt durch den Katalysator 10, der auf diese Weise besonders bei niedrigen Leistungen möglichst rasch aufgewärmt wird. In der gestrichelten Lage der Regelklappe 22 strömen die Abgase normal über die Diffusoren D_{I} und D_{II} und von dort in den Sammelbehälter 9, von wo aus die Abgase über den Katalysator 10 abströmen können.

Beim Ausführungsbeispiel nach Fig. 9 bis 11 sind an dem kleinvolumigen Sammelbehälter 8 zwei zueinander koaxial liegende Rohre L_{I} und L_{II} angeschlossen, von denen das Innere Rohr L_{I} wesentlich länger als das äußere Rohr L_{II} ist. An das Rohr L_{I} schließt der Diffusor D_{I} und an das Rohr L_{II} der Diffusor D_{II} an. Beide Diffusoren münden in den Sammelbehälter 9 aus und zwar der Diffusor D_{II} nur mit einem kurzen Anschlußstück 23, wogegen der Diffusor D_{I} zur Gänze im Sammelbehälter 9 liegt und erheblich kürzer ist als der Sammelbehälter. Der Sammelbehälter 9 weist einen ovalen Querschnitt 24 auf, welcher im Bereich des Diffusors D_{I} mit zwei Längswänden 25 und 26 abgeteilt ist, wodurch zwei Strömungsquerschnitte 25' und 26' an der Längsachse 24' des ovalen Querschnittes 24 gebildet werden. Diese Querschnitte werden von dem aus dem Diffusor D_{II} über das Anschlußstück 23 in den Sammelbehälter 9 eintretenden Abgas in Richtung zum Auslaß durchströmt. Der Katalysator kann einerseits als Rohrkatalysator im zylindrischen Teil der Rohre angeordnet werden oder, wie in Fig. 1 dargestellt und mit 10 bezeichnet, am auslaßseitigen Ende des Sammelbehälters 9.

## Patentansprüche

1. Auspuffanlage für Zweitakt-Brennkraftmaschinen mit einem Auspuffrohr (2) je Zylinder, an dessen einen konstanten Querschnitt aufweisenden Anfangsbereich zumindest zwei als Diffusoren (D_{I} und D_{II}) ausgebildete konische Bereiche anschließen, welche in einen gemeinsamen Sammelbehälter (9) münden, an welchen das Abgas-Endrohr (5) angeschlossen ist, **dadurch gekennzeichnet**, daß die Diffusoren (D_{I} und D_{II}) über parallele, gleichzeitig durchströmte Rohrstränge (L_{I} und L_{II}) unterschiedlicher Länge an den Anfangsbereich des Abgasrohres (2) konstanten Querschnittes anschließen und das Abgas-Endrohr (5) einen Katalysator (10) und/oder Schalldämpfer (11) umfaßt.

2. Auspuffanlage für mehrzylindrige Zweitakt-Brennkraftmaschinen nach Anspruch 1, **dadurch gekennzeichnet**, daß die Auspuffrohre (2, 18, 19) aller Zylinder (7) an einen einzigen kleinvolumigen Sammelbehälter (8) angeschlossen sind, von dem die zu zwei Diffusoren (D_{I} und D_{II}) führenden zwei Rohrstränge (L_{I} und L_{II}) unterschiedlicher Länge abzweigen.

3. Auspuffanlage nach Anspruch 1 oder 2, **dadurch gekennzeichnet**, daß Rohrverbindungsstücke (L₁, L₂) zwischen den beiden Diffusoren (D_{I}, D_{II}) und dem Sammelbehälter (9) vorgesehen sind, die verschiedene Länge aufweisen.

4. Auspuffanlage nach einem der Ansprüche 1 bis 3, **dadurch gekennzeichnet**, daß der Sammelbehälter (9) aus zwei Teilen (9' und 9'') besteht, die miteinander über eine Rohrleitung (L₃) vorbestimmter Länge verbunden sind und in die je einer der beiden Rohrstränge (L_{I} und L_{II}) über die Diffusoren (D_{I} und D_{II}) mündet.

5. Auspuffanlage nach einem der Ansprüche 1 bis 4, mit einem Katalysator, **dadurch gekennzeichnet**, daß der Katalysator (10) in den Sammelbehälter (9) integriert ist. (Fig. 5)

6. Auspuffanlage nach einem der Ansprüche 1 bis 5, **dadurch gekennzeichnet**, daß beide Diffusoren (D_{I}, D_{II}) im Sammelbehälter (9) angeordnet sind.

7. Auspuffanlage nach Anspruch 6, **dadurch gekennzeichnet**, daß der Sammelbehälter (9) gleichzeitig die Strömungsverbindung zwischen den Austritten der Diffusoren (D_{I} und D_{II}) herstellt.

8. Auspuffanlage nach Anspruch 6 oder 7, mit einem Katalysator (10) im anschließenden Abgas-Endrohr (5), **dadurch gekennzeichnet**, daß der Einströmraum (21) der Zuleitung zum Sammelbehälter (9) und der Abströmraum (20) der Zuleitung aus dem Sammelbehälter zum Abgas-Endrohr räumlich zusammengefaßt sind und ein Regelorgan, vorzugsweise eine Regelklappe (22), in diesem Bereich vorgesehen ist, die in einer Endstellung die Einströmung der Auspuffgase in den Sammelbehälter (9) über die beiden Diffusoren (D_{I} und D_{II}) und in der anderen Endstellung die Zuleitung mit dem Abgas-Endrohr (5) unter Umgehung des Sammelbehälters (5) verbindet.

9. Auspuffanlage nach Anspruch 1 oder 2, **dadurch gekennzeichnet,** daß der längere Rohrstrang (L_{I}) mit dem zugehörigen Diffusor (D_{I}) koaxial im kürzeren Rohrstrang (L_{II}) mit dem zweiten Diffusor (D_{II}) angeordnet ist.

10. Auspuffanlage nach Anspruch 9, **dadurch gekennzeichnet,** daß der Sammelbehälter (9) im wesentlichen aus einem Rohr gebildet ist und der am längeren Rohrstrang (L_{I}) anschließende Diffusor (D_{I}) kürzer ist als der Sammelbehälter (9) und zur Gänze in diesem liegt, und der an den kürzeren Rohrstrang (L_{II}) anschließende Diffusor (D_{II}) nur mit einem kurzen Anschlußstück (23) in den Sammelbehälter (9) mündet.

11. Auspuffanlage nach Anspruch 10, **dadurch gekennzeichnet,** daß das den Sammelbehälter (9) bildende Rohr einen ovalen Querschnitt (24) aufweist, der von dem an den längeren Rohrstrang (L_{I}) anschließenden Diffusor (D_{I}) etwa mittig durchsetzt ist, und die beiden Restquerschnitte (25' und 26') an der Längsachse (24') des ovalen Querschnittes (24) von dem aus dem zweiten Diffusor (D_{II}) austretenden Abgas durchströmt sind.

## Claims

1. An exhaust system for two-stroke internal combustion engines with an exhaust pipe (2) for each cylinder, whose front end, which is characterised by a constant cross-section, is followed by two or more conical sections configured as diffusers (D_{I} and D_{II}), which open into a common exhaust header (9) to which the exhaust tail pipe (5) is connected, **characterized in that** the diffusers (D_{I} and D_{II}) are connected to the front end of the exhaust pipe (2) characterised by a constant cross-section, by means of parallel branch pipes (L_{I} and L_{II}) of different length, which are swept by the exhaust simultaneously, and that the exhaust tail pipe (5) comprises a catalytic converter (10) and/or a silencer (11).

2. An exhaust system for multi-cylinder two-stroke internal combustion engines according to claim 1, **characterized in that** the exhaust pipes (2, 18, 19) from all cylinders (7) are connected to a single small-volume header (8), which in turn is connected to two branch pipes (L_{I} and L_{II}) of different length, each leading to a diffuser (D_{I} and D_{II}).

3. An exhaust system according to claim 1 or 2, **characterized in that** connecting pieces (L₁, L₂) of different length are provided between the two diffusers (D_{I}, D_{II}) and the header (9).

4. An exhaust system according to any of claims 1 to 3, **characterized in that** the exhaust header (9) is made of two parts (9' and 9''), which are connected with each other by a pipeline (L₃) of defined length, and each of which receives one of the two branch pipes (L_{I} and L_{II}) via the diffusers (D_{I} and D_{II}).

5. An exhaust system according to any of claims 1 to 4, **characterized in that** the catalytic converter (10) is integrated into the header (9). (Fig. 5).

6. An exhaust system according to any of claims 1 to 5, **characterized in that** both diffusers (D_{I} and D_{II}) are located in the header (9).

7. An exhaust system according to claim 6, **characterized in that** the header (9) also establishes the flow-connection between the outlets of the diffusers (D_{I} and D_{II}).

8. An exhaust system according to claim 6 or 7, with a catalytic converter (10) in the exhaust tail pipe (5), **characterized in that** the inlet passage (21) of the feed pipe into the exhaust header (9) and the outlet passage (20) of this pipe from the header into the tail pipe are combined, and that a control element is provided in this area, i.e. preferably a control valve (22), directing the flow of exhaust gases into the header (9) through the two diffusers (D_{I} and D_{II}) in one extreme position, and connecting feed pipe and tail pipe (5) while bypassing the header (9) in the other extreme position.

9. An exhaust system according to claim 1 or 2, **characterized in that** the longer of the two branch pipes (L_{I}) and its corresponding diffuser (D_{I}) is located inside and coaxial with the shorter branch (L_{II}) and its diffuser (D_{II}).

10. An exhaust system according to claim 9, **characterized in that** the header (9) basically is configured as a pipe, and that the diffuser (D_{I}) connected to the longer of the two branch pipes (L_{I}) is shorter than the header (9) and is entirely contained within it, whereas the diffuser (D_{II}) connected to the shorter branch pipe (L_{II}) opens into the header (9) only via a short piece of pipe (23).

11. An exhaust system according to claim 10, **characterized in that** the pipe forming the header (9) has an oval cross-section (24) whose centre is traversed by the diffuser (D_{I}) connected to the longer of the two branch pipes (L_{I}), and that the two residual cross-sections (25' and 26') along the longitudinal axis (24') of the oval cross-section (24) are swept by the exhaust gases coming from the second diffuser (D_{II}).

## Revendications

1. Dispositif d'echappement pour moteurs à combustion interne à deux temps avec un tube d'échappement (2) par cylindre, sur lequel se raccordent au moins deux domaines coniques constitués en forme de diffuseurs (D_{I} et D_{II}) dont le domaine d'entrée presente une section constante, qui débouchent dans un récipient collecteur commun (9), sur lequel est branché le tube terminal de gaz d'échappement (5), caracterisé en ce que les diffuseurs (D_{I} et D_{II}) se raccordent par des tubulures (L_{I} et L_{II}) de différentes longueurs, parallèles et balayées simultanément, au domaine initial du tube de gaz d'échappement (2) à section constante et que le tube terminal de gaz d'échappement (5) comprend un catalyseur (10) et/ou un silencieux (11).

2. Dispositif d'échappement pour moteur deux temps à plusieurs cylindres selon la revendication 1, caractérisé en ce que les tubes d'échappement (2, 18, 19) de tous les cylindres (7) sont branchés sur un seul petit récipient récepteur (8) de petit volume, d'où divergent les deux tubulures (L_{I} et L_{II}) conduisant aux deux diffuseurs (D_{I} et D_{II}),, avec des longueurs différentes.

3. Dispositif d'échappement selon la revendications 1 ou 2, caractérisé en ce qu'on prévoit des pièces tubulaires de liaison (L_{I}, L_{II}) entre les deux diffuseurs (D_{I}, D_{II}) et le récipient collecteur (9) qui ont des longueurs différentes.

4. Dispositif d'échappement selon l'une des revendications 1 à 3, caractérisé en ce que le récipient collecteur (9) se compose de deux parties (9' et 9'') qui sont reliées par une conduite (L₃) de longueur prédéterminée dans laquelle débouche chacune des deux tubulures (L_{I} et L_{II}) par l'intermédiaire des diffuseurs (D_{I} et D_{II}).

5. Dispositif d'échappement selon l'une des revendications 1 à 4 avec un catalyseur, caractérisé en ce que le catalyseur (10) est intégré dans le récipient collecteur (9) (Fig. 5).

6. Dispositif d'échappement selon l'une des revendications 1 à 5, caractérisé en ce que les deux diffuseur (D_{I}, D_{II}) sont disposés dans le récipient collecteurs (9).

7. Dispositif d'échappement selon la revendication 6, caractérisé en ce que le récipient collecteur (9) réalise simultanément la connexion d'écoulement entre les sorties des diffuseurs (D_{I} et D_{II}).

8. Dispositif d'échappement selon la revendication 6 ou 7, avec un catalyseur (10) dans le tube terminal de gaz d'échappement (5), caractérisé en ce que la chambre d'admission (21) de la conduite d'arrivée au récipient collecteur (9) et la chambre d'écoulement (20) de la conduite sortant du récipient collecteur vers le tube terminal de gaz d'échappement, sont rassemblées dans un même volume, et on prévoit un organe de régulation, de préféference un papillon (22) dans ce domaine qui, dans une position finale, permet l'écoulement des gaz d'échappement dans le récipient collecteur (9) par l'intermédiaire des deux diffuseurs (D_{I} et D_{II}) et dans l'autre position terminale il relie la conduite d'arrivée au tube terminal de gaz d'échappement (5) en court-circuitant le récipient collecteur (9).

9. Dispositif d'échappement selon la revendication 1 ou 2, caractérisé en ce que la tubulure la plus longue (L_{I}) avec le diffuseur correspondant, est disposée coaxialement dans la tubulure la plus courte (L_{II}) avec le deuxième diffuseur (D_{II}).

10. Dispositif d'échappement selon la revendication 9, caractérisé en ce que le récipient collecteur (9) est formé essentiellement d'un tube et que le diffuseur (D_{II}) raccordé à la tubulure la plus longue (L_{I}) est plus court que le récipient collecteur (9) et se trouve logé en totalité dans celui-ci, et le diffuseur (D_{II}) raccordé à la tubulure la plus courte (L_{II}) ne débouche que par une courte piéce de raccord (23) dans le récipient collecteur (9).

11. Dispositif d'échappement selon la revendication 10, caractérisé en ce que le tube formant le récipient collecteur (9) a une section ovale (24), qui est traversée à peu prés en son milieu par le diffuseur (D_{I}) raccordé à la tubulure la plus longue (L_{I}) et les deux sections restantes (25' et 26') le long de l'axe longitudinal (24') de la section ovale (24) sont balayées par le gaz d'échappement sortant du deuxième diffuseur (D_{II}).
